# EUROPEAN PATENT SPECIFICATION

(11) **EP 4 478 924 B1**
(45) Date of publication and mention of the grant of the patent: **11.02.2026**
(21) Application number: 23711576.1
(22) Date of filing: 17.02.2023
(51) Int. Cl.: A47J 42/18, A47J 42/08

(54) **DEVICE AND METHOD FOR ADJUSTING AN APPARATUS FOR GRINDING SEEDS BEANS OR LIKE**
VORRICHTUNG UND VERFAHREN ZUR EINSTELLUNG EINER VORRICHTUNG ZUM MAHLEN VON SAATGUT, BOHNEN ODER DERGLEICHEN
DISPOSITIF ET PROCÉDÉ DE RÉGLAGE D'UN APPAREIL DE BROYAGE DE GRAINES, DE GRAINS OU ANALOGUES

(30) Priority: 17.02.2022 IT 202200002954
(43) Date of publication of application: 25.12.2024
(73) Proprietor: La San Marco S.p.A., 34072 Gradisca d'Isonzo (GO) (IT)
(72) Inventor: NOCERA, Roberto, 34135 TRIESTE (IT); BOLZAN, Stefano, 34070 VILLESSE (GO) (IT); KRALJ, Stefano, 34010 SGONICO (TS) (IT)
(74) Representative: PGA S.p.A., Milano, Succursale di Lugano
(86) International application number: PCT/IT2023/050050
(87) International publication number: WO 2023/157038

(56) References cited:
- EP-A1- 3 473 148
- IT-B- 1 082 436
- US-A1- 2012 228 418

## Description

### FIELD OF THE INVENTION

The present invention concerns a device and a method for adjusting an apparatus for grinding seeds, preferably for food use, such as for example coffee beans, barley seeds, or other cereals, used to prepare hot beverages such as espresso coffee, infusions of barley and others, grains of salt, pepper or suchlike.

### BACKGROUND OF THE INVENTION

Apparatuses for grinding seeds are known, which comprise two opposing grinding elements, such as for example shucking grinders or rollers, rotating blades, which define between them a passage gap for the beans to be ground. During the operation of such apparatuses, the beans are forced through the gap and the contact with the two grinding elements causes them to be ground into a powder having an average granulometry proportional to the distance between the grinding elements.

Some known apparatuses also generally incorporate an adjustment device which allows the two grinding elements to be moved toward or away from each other in order to modify their reciprocal distance and adjust the granulometry of the powder obtained from the grinding.

Known adjustment devices comprise a snap-in mechanism which allows to position the grinding elements in a certain number of discrete positions, each of which corresponds to a certain distance between them.

This solution only allows to obtain an adjustment of the discrete type and limits the range of granulometries obtainable to the number of positions which the grinding elements can assume.

Furthermore, this does not allow an optimal adjustment of the granulometry of the powder, which for some uses is a fundamental parameter to obtain a quality product.

In fact, it is known that to obtain a good espresso coffee the coffee powder must have a granulometry between about 250 µm and 350 µm and for a mocha coffee the granulometry must be between about 400 µm and 500 µm. Furthermore, uses of ground coffee with a granulometry ranging from 600 µm to 1200 µm are also known, for the preparation of American coffee or French filter coffee.

Sometimes it is also necessary to select a certain granulometry value within the ranges indicated above, as a function of the variety of coffee, its origin, the content of oily substances, its degree of roasting and its other characteristics, therefore, different types of coffee beans require different grinding adjustments.

Furthermore, since the grinding elements wear out over time, it is normally necessary to change their reciprocal distance in order to restore the desired granulometry value.

Sometimes it could be necessary to adjust the distance between the grinding elements with a precision that can even be in the order of a micrometer, so as to compensate for the wear on the grinding elements, or to adapt the granulometry to a particular type of coffee beans.

In known apparatuses, however, since only a discrete adjustment of the distance is permitted, as a function of a finite number of predefined positions, it is not always possible to obtain such a fine adjustment.

Document US 2012/0228418 A1 describes a coffee grinder provided with a blocking device which allows a micrometric adjustment of the granulometry. In the solution described therein, a ring nut is provided with a threaded coupling which, by acting on an upper grinder-holder element, allows the movement of the upper grinder toward the lower grinder. When the desired adjustment level is reached, a cursor is rotated inside an arched slot in such a way as to align a hole on it with a hole on the ring nut and to reciprocally block them by means of a screw. The solution described in US 2012/0228418 A1, however, has the disadvantage that it allows the distance to be adjusted only by acting from the top downward, whereas when the ring nut is rotated in the opposite sense, the upper grinder is thrust upward by elastic means acting on the grinder-holder element integral with the upper grinder, so that in this direction it is not possible to have a precise adjustment of the position. Furthermore, the solution in US 2012/0228418 requires the use of screws to block the upper grinder in the desired position.

Document IT 1 082 436 B describes a coffee grinder apparatus equipped with a system to adjust the distance between the grinders, which comprises an adjustment ring coupled to the body of the apparatus by means of threading, the rotation of which entails the movement of a support ring associated with the upper grinder. In this solution, a downward adjustment of the position is also allowed, while the upward adjustment is influenced by the elastic means acting on the support ring, which generate friction between the components.

There is therefore a need to perfect a device and a method for adjusting an apparatus for grinding seeds, or beans, which can overcome at least one of the disadvantages of the state of the art.

To do this, it is necessary to solve the technical problem of providing an adjustment device which allows to obtain a wide range of granulometry values for the powder of the ground seeds.

One purpose of the present invention is to provide a device and a method for adjusting an apparatus for grinding seeds, beans or similar objects which allow to adjust the granulometry of the ground coffee particles with a precision even in the order of a few micrometers.

Another purpose is also to allow a precise adjustment of the position of the grinders, both as they move toward and also as they move away from each other.

Another purpose of the present invention is to provide a device and a method for adjusting an apparatus for grinding seeds, beans or similar objects which allow to improve the quality of the product obtained with the particles or with the powder of the seeds to be ground.

Another purpose of the invention is to provide a grinding apparatus which can be used to grind seeds and beans with a wide range of selectable granulometries.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a device according to the present invention has been embodied for adjusting the positions of a grinding element of an apparatus for grinding seeds, comprising a fixed support member, a movement member rotatable with respect to an axis and mounted mobile on the support member, and a displacement member configured to support the grinding element and cooperating with the movement member to translate along the axis with respect to the support member.

According to the invention, the movement member comprises or is connected to a drive portion configured to engage with the displacement member so as to thrust and respectively pull the latter in order to translate it continuously in one or the other direction along the axis, as a function of a rotation of the movement member in one or the other sense.

Acording to the invention, the device also comprises stabilization means configured to contrast, through friction, the movement of the movement member.

The rotation of the movement member therefore determines the position of the axially mobile grinding element and therefore its distance with respect to another axially fixed grinding element, and the stabilization means act as friction elements, keeping the movement member blocked in a stable position when adjustment actions act on it.

In particular, the rotation of the movement member involves a continuous translation of the displacement member in one or the other direction along the axis, allowing to perform substantially infinite adjustments of the position of the grinding element within a predefined range.

Thanks to the presence of the drive portion which engages with the displacement member so that it can both thrust it and pull it, it is possible to adjust the position in both directions precisely. Furthermore, this solution makes the presence of elastic means unnecessary, at least as regards the translation of the displacement member, even if such elastic means can in any case be present only for the purpose of negating play between respective components.

Thanks to the stabilization means which contrast, through friction, the rotation of the movement member and consequently also the axial translation of the displacement member, the reciprocal position between the movement member and the displacement member, and consequently the position of the grinding element, is kept stable over time, even during the operation of the grinding apparatus. This even in the absence of any elastic means.

In accordance with another aspect of the present invention, the stabilization means comprise a friction element interposed between, and in contact with, the movement member and the displacement member.

In accordance with another aspect of the present invention, the stabilization means comprise a friction element interposed between, and in contact with, the movement member and the support member.

According to some embodiments, the friction element consists of a ring-shaped gasket, in particular a quad-ring gasket, at least partly housed in a seating created on one of either the movement member or the displacement member.

In accordance with another aspect of the present invention, the movement member is screwed to the support member around the axis, and it contacts the displacement member to cause the translation of the latter in one or the other direction when it is set in rotation in one or the other sense.

According to some embodiments, the movement member comprises a coupling portion provided with a threaded external surface, by means of which the movement member is screwed to the support member, and the drive portion is made as a protruding protuberance projecting internally toward the axis and is configured to be inserted into a seating of the displacement member to cause the translation of the latter in one or the other direction when the movement member is set in rotation.

In accordance with another aspect of the present invention, the support member comprises guide means configured to guide the translation of the displacement member along the axis.

In accordance with another aspect of the present invention, the displacement member comprises constraint means configured to block the rotation with respect to the support member around the axis.

The constraint means advantageously cooperate with the guide means of the support member, thus limiting the degrees of freedom of the movement of the displacement member.

In accordance with another aspect of the present invention, the displacement member is at least partly contained inside the movement member, and it is coaxial therewith, and, moreover, the movement member is at least partly contained inside the support member, and it is coaxial therewith.

According to another aspect of the invention, the device comprises means for recovering, or reducing, the play that exists between respective threaded portions of the support member and the movement member, which comprise elastic means located with one end abutting against the support member and with the opposite end abutting against the displacement member in order to thrust the latter against the movement member and eliminate any play that exists between them, caused by the coupling tolerances.

According to some embodiments, the movement member comprises a first body provided with a gripping portion and a second body, distinct from the first body, provided with the coupling portion, wherein the first and second bodies are connected, during use, by means of removable attachment members. This conformation of the movement member allows to reciprocally disconnect the two bodies and suitably realign a zero position present on the gripping portion with a reference provided on a frame of the apparatus. In this way, it is possible to reset an absolute zero position over time, both in the event of any maintenance operations, and also to compensate for possible wear of the teeth of the grinding elements.

In accordance with another aspect of the present invention, an apparatus for grinding seeds comprises at least two grinding elements and a device as disclosed above, in which a grinding element is attached to the displacement member of the device in order to be moved toward or away from the latter.

In accordance with another aspect of the present invention, a method for adjusting a machine for grinding seeds provides to:
- move the movement member with respect to the support member by rotating it in one or the other sense around an axis to respectively thrust or pull the displacement member by means of the drive portion so as to cause a continuous translation of the displacement member in one or the other direction along the axis and position the grinding element at a desired distance with respect to the other grinding element;
- contrast, through friction, the movement of the movement member.

In accordance with another aspect of the present invention, the movement member is in contact with the displacement member and the method provides to screw the movement member onto the support member to cause the translation of the displacement member along the axis.

According to some embodiments, the method provides to contrast the movement of the movement member by means of a friction element made as a ring-shaped gasket, in particular a quad-ring gasket.

According to some embodiments, the method provides to perform a reset of a zero position of the grinding elements and realign a zero present on a gripping portion of a first body of the movement member with a reference provided on a frame of the apparatus.

This reset can comprise a step in which the movement member is rotated so as to thrust the displacement member until the grinding elements are taken into reciprocal contact, a step in which attachment members are removed which connect the first body to a second body provided with the drive portion, a step in which the first body is rotated to align the zero with the reference and a step in which the first body is connected to the second body with the attachment members.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a section of a device for adjusting the position of a grinding element of an apparatus for grinding seeds, in accordance with one embodiment of the present invention, inserted in an apparatus for grinding seeds;
- figs. 2 and 3 are two enlargements of the section of the device of fig. 1, in two different operating positions;
- fig. 4 is an enlargement of fig. 1;
- fig. 5 is an exploded view of the device of fig. 1;
- fig. 6 is an exploded view of a device for adjusting the position of a grinding element according to another embodiment of the invention;
- fig. 7 is a section view of the device of fig. 6;
- fig. 8 is a top view of the device of fig. 1 or fig. 7 inserted in a machine for grinding seeds.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

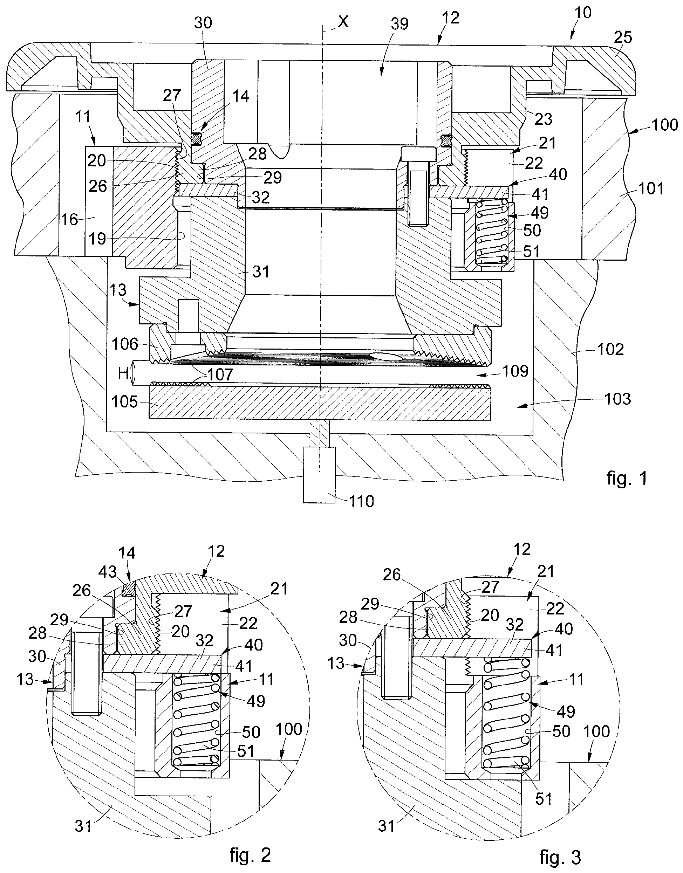

With reference to fig. 1, this shows a device 10 for adjusting the position of a grinding element, according to the present invention, configured to be inserted in an apparatus 100 for grinding seeds, and allow to adjust the granulometry of the particles of the ground substance, that is of the powder, obtained from the ground seeds.

We must clarify that in the present disclosure and in the attached claims, by the term "seeds" we mean all beans or grains of food origin, normally used to prepare hot beverages, or for other purposes. For example, the "seeds" can be coffee beans, barley seeds, or other similar cereals, or even peppercorns or suchlike.

The apparatus 100 in which the device 10 can be inserted and integrated can be a professional, domestic or industrial grinding apparatus of the bench type, for example of the autonomous or "stand alone" type, or in turn integrated in another machine, for example one for preparing beverages, or other, not shown.

The apparatus 100 comprises a frame 101 (fig. 1) on which a containing cup 102 is attached, defining a grinding chamber 103 inside it.

In the grinding chamber 103 there is disposed a pair of grinding elements which, in the example of fig. 1, are configured as two opposing grinders 105, 106 aligned along a common axis X.

The machine 100 comprises a lower grinder 105 and an upper grinder 106 with a toroidal shape, both provided with a series of cutting edges, or teeth 107, made, preferably, partly along their internal circular perimeter and partly on an external surface thereof, so that they define an intermediate grinding zone.

A gap 109 is defined between the two grinders 105, 106, through which the seeds to be ground are forced, coming into contact with the teeth 107 and being reduced into particles of ground substance.

The gap 109 is substantially a cylindrical aperture defined by the distance H between the grinders 105, 106 in a direction parallel to the axis X and by their external perimeter.

The granulometry of the particles of the ground substance and of the powder of the seeds ground by the grinders 105, 106 is proportional to the distance H.

One of the grinders 105, 106 is connected to a drive member 110 in order to be set in rotation, while the other grinder 105, 106 is attached to the device 10 of the present invention in order to be translated along the axis X.

In the example given here, the lower grinder 105 is attached to the drive member 110 and the upper grinder 106 is connected to the device 10 in order to be selectively moved away from, or toward, the lower grinder 105 along the axis X, to adjust the distance H.

We must clarify that, in other embodiments, the lower grinder 105 can be attached to the device 10 and the upper grinder 106 can be connected to the drive member 110, without departing from the scope of protection of the present invention.

The device 10 comprises a support member 11 configured to be attached to the frame 101 of the machine 100, and a movement member 12 configured to be maneuvered by a user, which is coupled in a mobile and rotatable manner to the support member 11.

The coupling between the movement member 12 and the support member 11 is such that a rotation of the movement member 12 also corresponds to a translation thereof along the axis X.

The device 10 also comprises a displacement member 13 to which the upper grinder 106 is attached and which is configured to translate along the axis X when the movement member 12 is moved by the user.

The support member 11 comprises an annular body 15 having a plurality of radial protrusions 16, each of which comprises a hole 17 to allow the attachment to the frame 101 of the apparatus 100.

The annular body 15 also comprises a central hole 19 having a threaded internal portion 20 to which the movement member 12 is coupled.

Preferably, the pitch of the threaded internal portion 20 is comprised between about 1 mm and about 2 mm, so that it is possible to adjust the height H with an accuracy of the order of a few micrometres, up to values close to 1 µm.

The support member 11 also comprises guide means 21 configured to guide the translation of the displacement member 13 along the axis X, as will be described below. The guide means 21 comprise a plurality of grooves 22, parallel to the axis X, made on the annular body 15 of the support member 11.

According to some embodiments, the movement member 12 comprises a gripping portion 25 suitable to be gripped and maneuvered by a user, and a coupling portion 26 provided with a threaded external surface 27 inserted in the hole 19 of the support member 11 and coupled to the threaded internal surface 20 thereof.

According to the embodiment shown in figs. 1-5, the movement member 12 comprises an annular body 23 which is provided at the upper part with the gripping portion 25 and at the lower part with the coupling portion 26, which are therefore made in a single body.

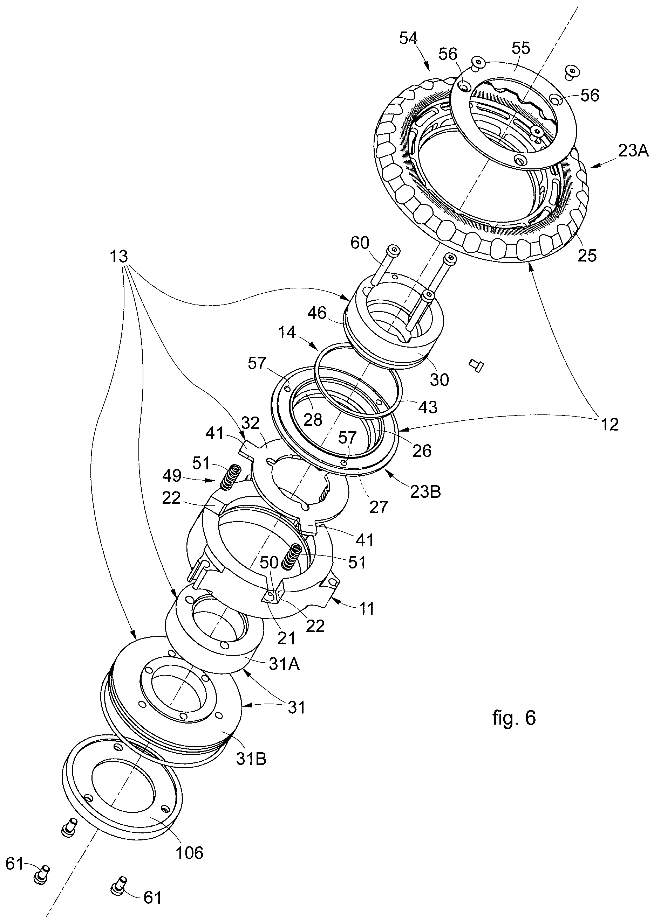

According to other embodiments, which will be described below with reference to figs. 6-7, the gripping portion 23 and the coupling portion 26 can be made on a first body 23A and a second body 23B, respectively, which can be reciprocally connected to each other.

Preferably, the gripping portion 25 protrudes radially with respect to the coupling portion 26 and to the support member 11, to allow an easy and precise grip by the user.

The movement member 12 also comprises a drive portion 28 configured to act on the displacement member 13 in order to thrust or pull it along the axis X.

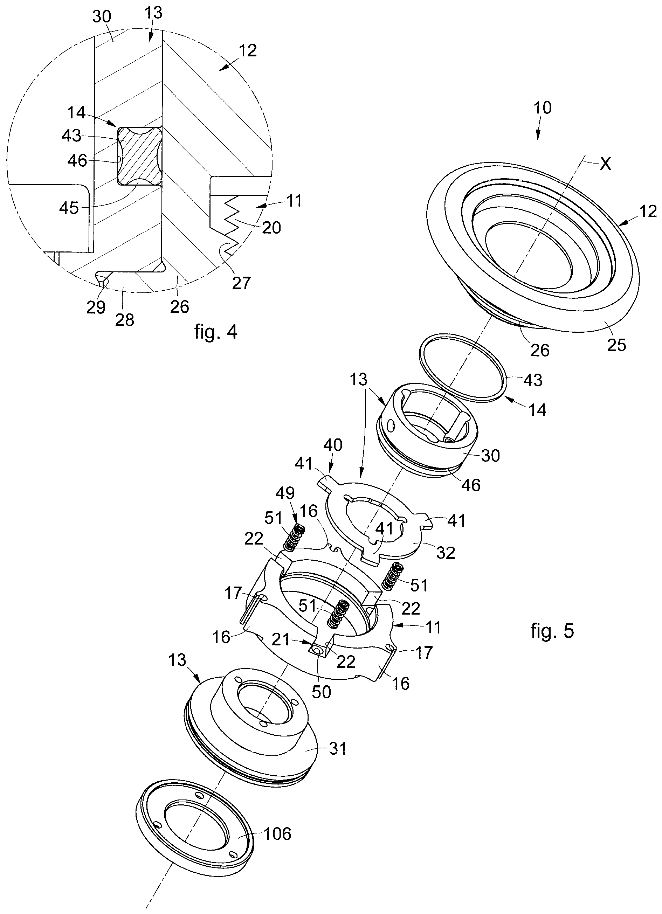

In this specific case, the drive portion 28 (figs. 2 and 3) is made as a protruding portion, projecting internally toward the axis X, disposed in correspondence with the position of the coupling portion 26. According to the embodiment of figs. 1 and 5, the drive portion 28 is made as a protuberance of the annular body 23.

The displacement member 13 comprises a corresponding seating 29 configured to house the drive portion 28 of the movement member 12.

However, it is clear that in other embodiments the drive portion can be defined by a seating made on the annular body 23, while the displacement member 13 can comprise a protuberance suitable to be inserted and engaged therein.

In the example given here, the displacement member 13 (fig. 1) is disposed inside the hole 19 of the support member 11 and comprises a first part 30 cooperating with the movement member 12, a second part 31 to which the upper grinder 106 is attached, and an intermediate part 32 interposed between the first part 31 and the second part 32.

We must clarify that the upper grinder 106 can be attached to the second part 31 by means of any known attachment mean 61 whatsoever. This allows to quickly replace the upper grinder 106 when it is worn.

The three parts 30, 31, 32 are attached to each other by connection means 60, preferably removable, of a type known per se and which will not be described in detail, for example screws, pins or suchlike.

Furthermore, the three parts 30, 31, 32 each comprise a respective through hole to define a central passage channel 39 for the seeds, which is in communication with the grinding chamber 103.

The first part 30 and the intermediate part 32 are shaped to define between them the seating 29 in which the drive portion 28 of the movement member 12 is disposed.

Furthermore, the displacement member 13 comprises constraint means 40 which cooperate with the guide means 21 and which are configured to block the rotation of the displacement member 13 with respect to the support member 11 around the axis X, and to allow the translation of the displacement member 13 along the axis X.

The constraint means 40 can comprise a plurality of protrusions 41 projecting from the intermediate part 32 radially with respect to the axis X and disposed inside the grooves 22 made on the support member 11.

According to some embodiments, the intermediate part 32 can have a trilobed shape, provided with three protrusions 41, although only two, or four or more can be provided.

Preferably, each protrusion 41 is inserted without play, or at least with a very small tolerance, in a respective groove 22 and can only slide along it, parallel to the axis X. Therefore, the protrusions 41 block the rotation of the displacement member 13 around the axis X, despite the displacement member 13 being in direct contact with the movement member 12 which is rotatable around the axis X.

In this way, a screwing of the movement member 12 on the support member 11 corresponds to a translation thereof along the axis X. When the movement member 12 translates, it drags the displacement member 13 with it, in one or the other sense, along the axis X, by means of the drive portion 28.

The displacement member 13 translates along the axis X without rotating, thanks to the cooperation between the guide means 21 and the constraint means 40, and it axially displaces the grinding element, in this specific case the upper grinder 106, in a continuous manner, thus allowing it to assume a substantially infinite number of positions.

By way of a purely non-limiting example, in the device 10 according to the embodiment of fig. 1, a clockwise rotation of the movement member 12 corresponds to a movement of the upper grinder 106 away from the lower grinder 105 (fig. 1). On the other hand, an anti-clockwise rotation of the movement member 12 corresponds to a movement of the upper grinder 106 toward the lower grinder 105.

This allows to reciprocally position the two grinders 105, 106 in any intermediate position whatsoever between a lower end-of-travel position (fig. 2) in which they are in contact with each other, and an upper end-of-travel position (fig. 3) in which they are distanced from each other by a certain maximum distance Hmax.

In this way, the distance H between the two grinders 105, 106 can be adjusted continuously between such end-of-travel positions, with an accuracy of up to even 1 µm, so that it is always possible to obtain the desired granulometry of the particles of the ground substance.

In accordance with one aspect of the present invention, the device 10 also comprises stabilization means 14 (figs. 1 and 4) configured to stabilize the axial position of the displacement member 13 by contrasting, through friction, the rotation of the displacement member 12 in both senses.

In the example of fig. 4, the stabilization means 14 comprise a friction element 43 disposed in a seating 45 which is defined by an annular cavity 46 made on the displacement member 13. In particular, the cavity 46 is positioned on an external surface of the displacement member 13 so as to be plugged by an internal surface of the movement member 12.

In this way, the friction element 43 disposed in the cavity 46 is interposed between the displacement member 13 and the movement member 12 and in contact with them.

The cross section of the friction element 43 has slightly larger sizes than the sizes of the cavity 46, so that it is compressed in the seating 45.

The friction element 43 contrasts the reciprocal rotation between the movement member 12 and the displacement member 13 so that, on the one hand, it prevents the involuntary rotation of the movement member 12, and on the other hand, it requires the user to exert a certain torque in order to rotate the movement member 12.

Therefore, on the one hand, the involuntary displacement of the movement member 12 and consequently of the grinder 106 is prevented, and on the other hand, the precision of the movement of the movement member 12 when it is moved by the user is increased.

In fact, by slightly contrasting the rotation of the movement member 12 imposed by the user, it is possible to position the latter with greater precision without it continuing to rotate by inertia or accidentally slipping, rotating by a greater angle than the one desired by the user.

The friction generated between the friction element 43 and the movement member 12 is such as to prevent an accidental displacement of the latter, and therefore of the grinder 106, during the operation of the grinding apparatus 100.

This allows to take the grinder 106, easily and with extreme precision, to any desired position whatsoever between the lower end-of-travel position and the upper end-of-travel position, in a continuous manner and without jolty transitions between two different intermediate positions.

Preferably, the friction element 43 is a "quad-ring" made of a polymeric material with a high friction coefficient.

The device 10 can also comprise means 49 (figs. 1 and 5) for negating the play between the threaded portion 20 of the support member 11 and the threaded portion 27 of the movement member 12.

The negating means 49 comprise a plurality of holes 50 made on the support member 11, in each of which a respective spring 51 is inserted. Each hole 50 has a closed, or partly closed, end on which the spring 51 rests and an open end from which the spring 51 can exit.

Each spring 51 abuts and presses against the displacement member 13 which in turn presses on the movement member 12 taking the threads of its threaded portion 27 against the threads of the threaded portion 20 of the support member 11 and consequently negating the play.

We must clarify that the spring 51 is always compressed in both the upper and also the lower end-of-travel positions (fig. 2 and 3).

In this specific example, each hole 50 of the negating means 49 is made in correspondence with a respective groove 22 (fig. 5) so that each spring 51 presses against a respective protrusion 41 of the intermediate part 32 of the displacement member 13.

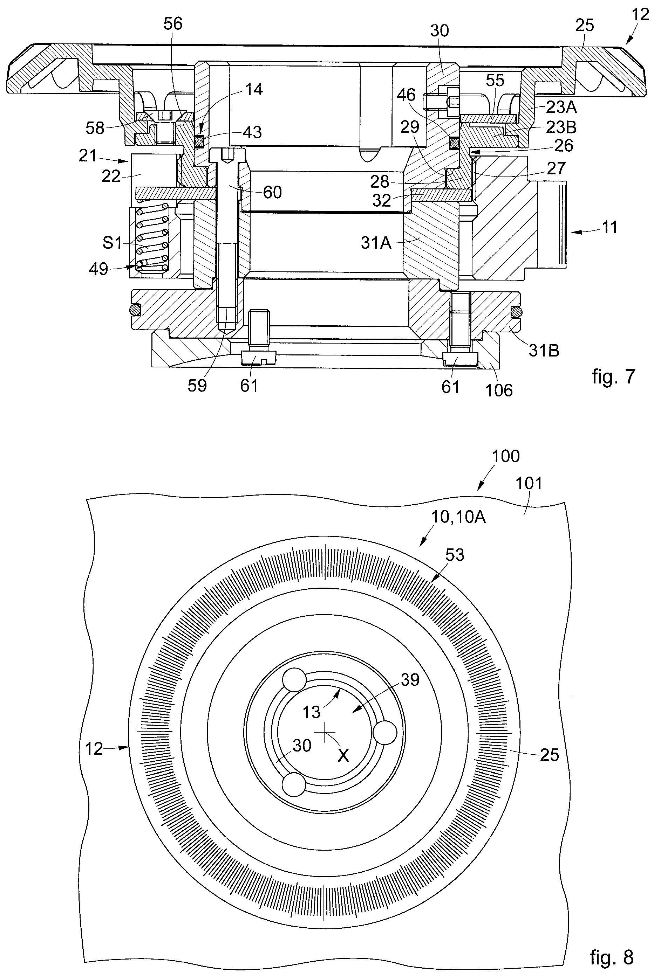

A numbered scale 53 (fig. 8) can be made on the gripping portion 25 of the movement member 12, which describes the magnitude of the displacement of the grinder 106 along the axis X, in relation to an angle of rotation of the movement member 12. The numbered scale 53 can comprise a number N of notches comprised between 150 and 1500, the purpose of which is purely indicative since the gripping portion 25 can also assume intermediate positions between the notches.

At the time of installation, or when it is necessary to replace the grinding elements 105, 106, the position "0" of the numbered scale 53 can, for example, be associated with a substantially zero distance between the grinding elements 105, 106, while the position "N" can be associated with the distance corresponding to the maximum height Hmax, and it can be reached by performing a complete clockwise rotation starting from the position "0".

Figs. 6 and 7 show a variant of a device 10A according to the invention, which differs from the first embodiment in that the gripping portion 25 and the coupling portion 28 are made on two distinct and separate annular bodies 23A, 23B.

The components that are identical to those of the first embodiment of figs. 1-5 are indicated with the same reference numbers and will not be described further.

During use, the first 23A and the second body 23B are reciprocally connected by means of removable attachment members 54.

According to some embodiments, the attachment members 54 can comprise an annular blocking element 55 configured to be positioned resting on the first body 23A and provided with through holes 56 configured to align with respective through holes 57 made on the second body 23B, to allow the insertion of screws 58, pins or suchlike.

This conformation allows the position "0" to be reset over time, for example in order to compensate for the wear of the grinders 105, 106.

It is in fact sufficient to rotate the movement member 12 until the upper grinder 106 comes into contact with the lower grinder 105, assuming the position "0" and subsequently remove the attachment members 54, rotate the gripping portion 25, that is, the first body 23A in such a way that the zero present on the numbered scale 53 aligns with a reference, for example a mark provided on the frame 101 of the apparatus 100, and reinsert the attachment members 54 in order to reciprocally block the first 23A and the second body 23B with respect to each other.

The device 10A of the second embodiment also differs from that of the first embodiment in that the second part 31 of the displacement member 13 comprises a first 31A and a second element 31B, which are distinct from each other and reciprocally connected, during use, by means of removable attachment members 59, of a type known per se, for example screws, pins or suchlike.

The operation of the device 10, 10A described heretofore, which corresponds to the method according to the present invention, comprises the following steps.

In order to adjust the distance H that axially separates the two grinders 105, 106, a user sets the movement member 12 in rotation with respect to the support member 11.

In the example given here, to bring the two grinders 105, 106 closer together, the movement member 12 is screwed clockwise onto the support member 11. Alternatively, to move the two grinders 105, 106 away from each other, the movement member 12 is screwed clockwise by the support member 11. Furthermore, the method provides to contrast, through friction, the rotation of the movement member 12 by means of the stabilization means 14.

In the preferred embodiment, the contrast, through friction, to the rotation of the movement member 12 is given by a friction element 43 located in contact with the displacement member 13 and with the movement member 12.

In another embodiment, the contrast, through friction, to the rotation of the movement member 12 is given by a friction element 43 located in contact with the support member 11 and with the movement member 12.

Preferably, the friction element 43 is a ring-shaped gasket, in particular a quad-ring gasket.

The method can also provide to negate any play present between the threaded portions 20, 27 of the components, in particular of the support member 11 and of the movement member 12, by means of negating means 49 which act on the displacement member 13, thrusting it toward the movement member 12.

According to other embodiments, the method provides to perform a reset of a zero position of the grinders 105, 106 and realign a zero present on the gripping portion 25 of the first body 23A of the movement member 12 with a reference provided on the frame 101 of the apparatus 100, for example a reference line, or other sign.

This reset can be performed either during cleaning or maintenance operations, or possible replacement of one or both of the grinders 105, 106, or also to compensate for the wear of the teeth 107 over time, so as to always grind the seeds with the desired granulometry.

According to some embodiments, the reset comprises a step in which the movement member 12 is rotated so as to thrust the displacement member 13 until the grinders 105, 106 are taken into reciprocal contact, a step in which the attachment elements 60, which connect the first body 23A to the second body 23B provided with the drive portion 28, are removed, a step in which the first body 23A is rotated in order to align the zero present on the numbered scale 53 with the reference, and a step in which the first body 23A is connected to the second body 23B with the attachment members 60.

The method can also provide to negate any play present between the threaded portions 20, 27 of the support member 11 and of the movement member 12, by means of elastic negating means 49 kept in a compressed condition, which act on the displacement member 13 and thrust the latter and the movement member 12 taking the threads of its threaded portion 27 against the threads of the threaded portion 20 of the support member 11.

It is clear that modifications and/or additions of parts may be made to the device 10, 10A and to the method as described heretofore, without departing from the field and scope of the present invention, as defined by the claims.

It is also clear that, although the present invention has been described with reference to some specific examples, a person of skill in the art shall certainly be able to achieve many other equivalent forms of device and method for adjusting a machine for grinding seeds, grains or similar objects, having the characteristics as set forth in the claims and hence all coming within the field of protection defined by said claims. In the following claims, the sole purpose of the references in brackets is to facilitate their reading and they must not be considered as restrictive factors with regard to the scope of protection defined by the same claims.

## Claims

1. Device (10, 10A) for adjusting the positions of a grinding element (106) of an apparatus (100) for grinding seeds, said device comprising a movement member (12) rotatable with respect to an axis (X) mounted mobile on a fixed support member (11), a displacement member (13) configured to support said grinding element (106) and cooperating with said movement member (12), wherein said device (10, 10A) comprises stabilization means (14) configured to contrast the movement of said movement member (12) through friction, wherein said movement member (12) comprises a drive portion (28) configured to engage with said displacement member (13) so as to thrust and respectively pull the latter in order to translate it continuously in one or the other direction along said axis (X), with respect to said support member (11), as a function of a rotation of said movement member (12) in one or the other sense.

2. Device (10, 10A) as in claim 1, **characterized in that** said movement member (12) comprises a coupling portion (26) provided with a threaded external surface (27), by means of which said movement member (12) is screwed to said support member (11) and said drive portion (28) is made as a protruding protuberance projecting internally toward said axis (X) and is configured to be inserted into a seating (29) of said displacement member (13) to cause the translation of the latter when said movement member (12) is set in rotation.

3. Device (10, 10A) as in claim 1 or 2, **characterized in that** said stabilization means (14) comprise a friction element (43) interposed between, and in contact with, said movement member (12) and said displacement member (13).

4. Device (10, 10A) as in any claim hereinbefore, **characterized in that** said stabilization means (14) comprise a friction element (43) interposed between, and in contact with, said movement member (12) and said support member (11).

5. Device (10, 10A) as in claim 3 or 4, **characterized in that** said friction element (43) is a ring-shaped gasket, in particular a quad-ring gasket.

6. Device (10, 10A) as in any claim hereinbefore, **characterized in that** said support member (11) comprises guide means (21) configured to guide the translation of said displacement member (13), and said displacement member (13) comprises constraint means (40) configured to cooperate with said guide means (21) and block the rotation of said displacement member (13) around said axis (X).

7. Device (10, 10A) as in any claim hereinbefore, **characterized in that** said displacement member (13) is at least partly contained inside said movement member (12) and said support member (11), and it is coaxial with them, and said movement member (12) is at least partly contained inside said support member (11) and it is coaxial with it.

8. Device (10, 10A) as in claim 2 or in any claim from 3 to 7 when it depends on claim 2, **characterized in that** it comprises means (49) for negating the play between respective threaded portions (20, 27) of said support member (11) and said movement member (12), which comprise elastic means (51) located with one end abutting against said support member (11) and with the opposite end abutting against said displacement member (13) in order to thrust the latter against said movement member (12).

9. Device (10A) as in claim 2 or in any claim from 3 to 8 when they depend on claim 2, **characterized in that** said movement member (12) comprises a first body (23A) provided with a gripping portion (25) and a second body (23B), distinct from said first body (23A), provided with said coupling portion (26), wherein said first and second bodies (23A, 23B) are connected, during use, by means of removable attachment members (60).

10. Device (10, 10A) as in any claim hereinbefore, **characterized in that** said displacement member (13) comprises a first part (30) cooperating with said movement member (12), a second part (31) to which said grinding element (106) is attached during use, and an intermediate part (32) interposed between said first part (30) and said second part (31), which are attached to each other by means of removable connection means (60).

11. Device (10, 10A) as in claims 6 and 10, **characterized in that** said second part (32) comprises a plurality of protrusions (41) projecting radially with respect to said axis (X), which define said constraint means (40) and are configured to be disposed and slide, during use, in respective grooves (22) of said guide means (21).

12. Apparatus (100) for grinding seeds, comprising at least two grinding elements (105, 106) and a device (10, 10A) as in any claim hereinbefore, in which a mobile grinding element (106) is attached to said displacement member (13) of said device (10, 10A).

13. Method for adjusting a position of a grinding element (106) of an apparatus (100) for grinding seeds, **characterized in that** it provides to:
- make available an apparatus (100) for grinding seeds comprising at least two grinding elements (105, 106) and an adjustment device (10, 10A) comprising a fixed support member (11), a movement member (12) mounted mobile on said support member (11) and a displacement member (13), which supports one of said grinding elements (106) and is engaged with a drive portion (28) of said movement member (12);
- move said movement member (12) with respect to said support member (11) by rotating it in one or the other sense around an axis (X) in order to respectively thrust or pull said displacement member (13) by means of said drive portion (28) so as to cause a continuous translation of said displacement member (13) in one or the other direction along said axis (X) and position said grinding element (106) at a desired distance with respect to the other grinding element (105);
- contrast, through friction, the movement of said movement member (12) by means of stabilization means (14).

14. Method as in claim 13, **characterized in that** it provides to perform a reset of a zero position of said grinding elements (105, 106) and realign a zero present on a gripping portion (25) of a first body (23A) of said movement member (12) with a reference provided on a frame (101) of said apparatus (100), said reset comprising a step in which said movement member (12) is rotated so as to thrust said displacement member (13) until said grinding elements (105, 106) are taken into reciprocal contact, a step in which attachment members (60) are removed which connect said first body (23A) to a second body (23B) provided with said drive portion (28), a step in which said first body (23A) is rotated to align the zero with said reference and a step in which said first body (23A) is connected to said second body (23B) with said attachment members (60).

15. Method as in one or the other of claims 13 or 14, **characterized in that** it provides to negate the play present between threaded portions (20, 27) of said support member (11) and said movement member (12), by means of elastic negating means (49) kept in a compressed condition, which act on said displacement member (13) and thrust the latter and said movement member (12) taking the threads of its threaded portion (27) against the threads of the threaded portion (20) of said support member (11).

## Patentansprüche

1. Einrichtung (10, 10A) zum Einstellen der Positionen eines Mahlelements (106) einer Vorrichtung (100) zum Mahlen von Samen, wobei die Einrichtung ein Bewegungselement (12), welches in Bezug auf eine Achse (X) drehbar ist und beweglich an einem festen Halterungselement (11) montiert ist, und ein Verlagerungselement (13) umfasst, welches dazu eingerichtet ist, das Mahlelement (106) zu haltern, und welches mit dem Bewegungselement (12) zusammenwirkt, wobei die Einrichtung (10, 10A) Stabilisierungsmittel (14) umfasst, welche dazu eingerichtet sind, der Bewegung des Bewegungselements (12) durch Reibung entgegenzuwirken, wobei
das Bewegungselement (12) einen Antriebsabschnitt (28) umfasst, welcher dazu eingerichtet ist, mit dem Verlagerungselement (13) in Eingriff zu treten, so dass er das Letztere schiebt bzw. zieht, um es als eine Funktion einer Drehung des Bewegungselements (12) in einem oder dem anderen Drehsinn in Bezug auf das Halterungselement (11) entlang der Achse (X) kontinuierlich in eine oder die andere Richtung zu verschieben

2. Einrichtung (10, 10A) nach Anspruch 1, **dadurch gekennzeichnet, dass** das Bewegungselement (12) einen Kopplungsabschnitt (26) umfasst, welcher mit einer mit einem Gewinde versehenen Außenfläche (27) bereitgestellt ist, mittels welcher das Bewegungselement (12) an das Halterungselement (11) geschraubt ist, und der Antriebsabschnitt (28) als eine vorstehende Erhebung ausgeführt ist, welche in Richtung der Achse (X) nach innen vorsteht und dazu eingerichtet ist, in eine Aufnahme (29) des Verlagerungselements (13) eingesetzt zu sein, um die Verschiebung des Letzteren zu bewirken, wenn das Bewegungselement (12) in Drehung versetzt wird.

3. Einrichtung (10, 10A) nach Anspruch 1 oder 2, **dadurch gekennzeichnet, dass** die Stabilisierungsmittel (14) ein Reibungselement (43) umfassen, welches zwischen dem Bewegungselement (12) und dem Verlagerungselement (13) eingefügt ist und damit in Kontakt steht.

4. Einrichtung (10, 10A) nach jeglichem vorhergehenden Anspruch, **dadurch gekennzeichnet, dass** die Stabilisierungsmittel (14) ein Reibungselement (43) umfassen, welches zwischen dem Bewegungselement (12) und dem Halterungselement (11) eingefügt ist und damit in Kontakt steht.

5. Einrichtung (10, 10A) nach Anspruch 3 oder 4, **dadurch gekennzeichnet, dass** das Reibungselement (43) eine ringförmige Dichtung, insbesondere eine Vierfachringdichtung, ist.

6. Einrichtung (10, 10A) nach jeglichem vorhergehenden Anspruch, **dadurch gekennzeichnet, dass** das Halterungselement (11) Führungsmittel (21) umfasst, welche dazu eingerichtet sind, die Verschiebung des Verlagerungselements (13) zu führen, und das Verlagerungselement (13) Beschränkungsmittel (40) umfasst, welche dazu eingerichtet sind, mit den Führungsmitteln (21) zusammenzuwirken und die Drehung des Verlagerungselements (13) um die Achse (X) herum zu blockieren.

7. Einrichtung (10, 10A) nach jeglichem vorhergehenden Anspruch, **dadurch gekennzeichnet, dass** das Verlagerungselement (13) wenigstens teilweise innerhalb des Bewegungselements (12) und des Halterungselements (11) enthalten ist und es koaxial zu diesen ist und das Bewegungselement (12) wenigstens teilweise innerhalb des Halterungselements (11) enthalten ist und es koaxial zu diesem ist.

8. Einrichtung (10, 10A) nach Anspruch 2 oder nach jeglichem Anspruch von 3 bis 7, wenn er von Anspruch 2 abhängig ist, **dadurch gekennzeichnet, dass** sie Mittel (49) zum Aufheben des Spiels zwischen jeweiligen Gewindeabschnitten (20, 27) des Halterungselements (11) und des Bewegungselements (12) umfasst, welche elastische Mittel (51) umfassen, die mit einem Ende gegen das Halterungselement (11) anstoßend und mit dem entgegengesetzten Ende gegen das Verlagerungselement (13) anstoßend angeordnet sind, um das Letztere gegen das Bewegungselement (12) zu schieben.

9. Einrichtung (10A) nach Anspruch 2 oder nach jeglichem Anspruch von 3 bis 8, wenn sie von Anspruch 2 abhängig sind, **dadurch gekennzeichnet, dass** das Bewegungselement (12) einen ersten Körper (23A), welcher mit einem Greifabschnitt (25) bereitgestellt ist, und einen von dem ersten Körper (23A) verschiedenen zweiten Körper (23B) umfasst, welcher mit dem Kopplungsabschnitt (26) bereitgestellt ist, wobei der erste und der zweite Körper (23A, 23B) während einer Verwendung mittels abnehmbarer Befestigungselemente (60) verbunden sind.

10. Einrichtung (10, 10A) nach jeglichem vorhergehenden Anspruch, **dadurch gekennzeichnet, dass** das Verlagerungselement (13) einen ersten Teil (30), welcher mit dem Bewegungselement (12) zusammenwirkt, einen zweiten Teil (31), an welchem während einer Verwendung das Mahlelement (106) angebracht ist, und einen Zwischenteil (32) umfasst, welcher zwischen dem ersten Teil (30) und dem zweiten Teil (31) eingefügt ist, welche mittels abnehmbarer Verbindungselemente (60) aneinander angebracht sind.

11. Einrichtung (10, 10A) nach den Ansprüchen 6 und 10, **dadurch gekennzeichnet, dass** der zweite Teil (32) eine Mehrzahl von in Bezug auf die Achse (X) radial vorstehenden Vorsprüngen (41) umfasst, welche die Beschränkungsmittel (40) definieren und dazu eingerichtet sind, während einer Verwendung in jeweiligen Nuten (22) der Führungsmittel (21) angeordnet zu sein und zu gleiten.

12. Vorrichtung (100) zum Mahlen von Samen, umfassend wenigstens zwei Mahlelemente (105, 106) und eine Einrichtung (10, 10A) nach jeglichem vorhergehenden Anspruch, wobei ein bewegliches Mahlelement (106) an dem Verlagerungselement (13) der Einrichtung (10, 10A) angebracht ist.

13. Verfahren zum Einstellen einer Position eines Mahlelements (106) einer Vorrichtung (100) zum Mahlen von Samen, **dadurch gekennzeichnet, dass** es bereitstellt:
- zur Verfügung stellen einer Vorrichtung (100) zum Mahlen von Samen, welche wenigstens zwei Mahlelemente (105, 106) und eine Einstelleinrichtung (10, 10A) umfasst, die ein festes Halterungselement (11), ein Bewegungselement (12), welches beweglich an dem Halterungselement (11) montiert ist, und ein Verlagerungselement (13) umfasst, welches eines der Mahlelemente (106) haltert und mit einem Antriebsabschnitt (28) des Bewegungselements (12) in Eingriff gebracht ist;
- Bewegen des Bewegungselements (12) in Bezug auf das Halterungselement (11) durch ein Drehen desselben in einem oder dem anderen Drehsinn um eine Achse (X) herum, um das Verlagerungselement (13) mittels des Antriebsabschnitts (28) zu schieben bzw. zu ziehen, so dass eine kontinuierliche Verschiebung des Verlagerungselements (13) entlang der Achse (X) in eine oder die andere Richtung bewirkt wird und das Mahlelement (106) in Bezug auf das andere Mahlelement (105) in einem gewünschten Abstand positioniert wird;
- Entgegenwirken, durch Reibung, der Bewegung des Bewegungselements (12) mittels Stabilisierungsmitteln (14).

14. Verfahren nach Anspruch 13, **dadurch gekennzeichnet, dass** es ein Durchführen eines Zurücksetzens auf eine Nullstellung der Mahlelemente (105, 106) und ein Neuausrichten eines Nullpunkts, welcher an einem Greifabschnitt (25) eines ersten Körpers (23A) des Bewegungselements (12) vorhanden ist, mit einer Referenz bereitstellt, welche an einem Rahmen (101) der Vorrichtung (100) bereitgestellt ist, wobei das Zurücksetzen einen Schritt, in welchem das Bewegungselement (12) derart gedreht wird, dass es das Verlagerungselement (13) schiebt, bis die Mahlelemente (105, 106) in einen gegenseitigen Kontakt gezogen werden, einen Schritt, in welchem Befestigungselemente (60) entfernt werden, welche den ersten Körper (23A) mit einem zweiten Körper (23B) verbinden, welcher mit dem Antriebsabschnitt (28) bereitgestellt ist, einen Schritt, in welchem der erste Körper (23A) gedreht wird, um den Nullpunkt mit der Referenz auszurichten, und einen Schritt umfasst, in welchem der erste Körper (23A) mit den Befestigungselementen (60) mit dem zweiten Körper (23B) verbunden wird.

15. Verfahren nach einem oder dem anderen der Ansprüche 13 oder 14, **dadurch gekennzeichnet, dass** es ein Aufheben des Spiels bereitstellt, welches zwischen Gewindeabschnitten (20, 27) des Halterungselements (11) und des Bewegungselements (12) vorhanden ist, mittels in einem komprimierten Zustand gehaltenen elastischen Aufhebungsmitteln (49), welche auf das Verlagerungselement (13) wirken und das Letztere und das Bewegungselement (12) schieben, wodurch die Gewindegänge seines Gewindeabschnitts (27) gegen die Gewindegänge des Gewindeabschnitts (20) des Halterungselements (11) gezogen werden.

## Revendications

1. Dispositif (10, 10A) d'ajustement des positions d'un élément de broyage (106) d'un appareil (100) de broyage de graines, ledit dispositif comprenant un élément de mouvement (12) pouvant tourner par rapport à un axe (X) monté mobile sur un élément de support (11) fixe, un élément de déplacement (13) configuré pour supporter ledit élément de broyage (106) et coopérant avec ledit élément de mouvement (12), dans lequel ledit dispositif (10, 10A) comprend un moyen de stabilisation (14) configuré pour contraster le mouvement dudit élément de mouvement (12) par friction, dans lequel ledit élément de mouvement (12) comprend une portion d'entraînement (28) configurée pour s'engager avec ledit élément de déplacement (13) afin de pousser et de tirer respectivement ce dernier afin de lui faire effectuer une translation continuellement dans l'une ou l'autre direction le long dudit axe (X), par rapport audit élément de support (11), comme une fonction d'une rotation dudit élément de mouvement (12) dans l'un ou l'autre sens.

2. Dispositif (10, 10A) tel que selon la revendication 1, **caractérisé en ce que** ledit élément de mouvement (12) comprend une portion d'accouplement (26) pourvue d'une surface externe filetée (27), à l'aide de laquelle ledit élément de mouvement (12) est vissé audit élément de support (11) et ladite portion d'entraînement (28) est fabriquée comme une protubérance faisant saillie se projetant au plan interne vers ledit axe (X) et est configurée pour être insérée dans un siège (29) dudit élément de déplacement (13) pour amener la translation de ce dernier lorsque ledit élément de mouvement (12) est placé en rotation.

3. Dispositif (10, 10A) tel que selon la revendication 1 ou 2, **caractérisé en ce que** ledit moyen de stabilisation (14) comprend un élément de friction (43) interposé entre, et en contact avec, ledit élément de mouvement (12) et ledit élément de déplacement (13).

4. Dispositif (10, 10A) tel que selon l'une quelconque des revendications ci-inclus précédentes, **caractérisé en ce que** ledit moyen de stabilisation (14) comprend un élément de friction (43) interposé entre, et en contact avec, ledit élément de mouvement (12) et ledit élément de support (11).

5. Dispositif (10, 10A) tel que selon la revendication 3 ou 4, **caractérisé en ce que** ledit élément de friction (43) est un joint en forme de bague, en particulier un joint d'étanchéité à quatre lobes.

6. Dispositif (10, 10A) tel que selon l'une quelconque des revendications ci-inclus précédentes, **caractérisé en ce que** ledit élément de support (11) comprend un moyen de guidage (21) configuré pour guider la translation dudit élément de déplacement (13), et ledit élément de déplacement (13) comprend un moyen de contrainte (40) configuré pour coopérer avec ledit moyen de guidage (21) et pour bloquer la rotation dudit élément de déplacement (13) autour dudit axe (X).

7. Dispositif (10, 10A) tel que selon l'une quelconque des revendications ci-inclus précédentes, **caractérisé en ce que** ledit élément de déplacement (13) est au moins partiellement contenu à l'intérieur dudit élément de mouvement (12) et dudit élément de support (11), et est coaxial avec eux, et ledit élément de mouvement (12) est au moins partiellement contenu à l'intérieur dudit élément de support (11) et est coaxial avec lui.

8. Dispositif (10, 10A) tel que selon la revendication 2 ou selon l'une quelconque des revendications de 3 à 7 lorsqu'elle dépend de la revendication 2, **caractérisé en ce qu'**il comprend un moyen (49) de suppression du jeu entre les portions filetées (20, 27) respectives dudit élément de support (11) et dudit élément de mouvement (12), qui comprennent un moyen élastique (51) localisé avec une extrémité venant en butée contre ledit élément de support (11) et avec l'extrémité opposée venant en butée contre ledit élément de déplacement (13) afin de pousser ce dernier contre ledit élément de mouvement (12).

9. Dispositif (10A) tel que selon la revendication 2 ou selon l'une quelconque des revendications de 3 à 8 lorsqu'elles dépendent de la revendication 2, **caractérisé en ce que** ledit élément de mouvement (12) comprend un premier corps (23A) pourvu d'une portion de préhension (25) et d'un second corps (23B), distinct dudit premier corps (23A), pourvu de ladite portion d'accouplement (26), dans lequel lesdits premier et second corps (23A, 23B) sont raccordés, durant l'utilisation, à l'aide d'éléments de fixation (60) amovibles.

10. Dispositif (10, 10A) tel que selon l'une quelconque des revendications ci-inclus précédentes, **caractérisé en ce que** ledit élément de déplacement (13) comprend une première partie (30) coopérant avec ledit élément de mouvement (12), une seconde partie (31) à laquelle ledit élément de broyage (106) est fixé durant l'utilisation, et une partie intermédiaire (32) interposée entre ladite première partie (30) et ladite seconde partie (31), qui sont fixées l'une à l'autre à l'aide d'un moyen de raccordement (60) amovible.

11. Dispositif (10, 10A) tel que selon les revendications 6 et 10, **caractérisé en ce que** ladite seconde partie (32) comprend une pluralité de protubérances (41) se projetant radialement par rapport audit axe (X), qui définissent ledit moyen de contrainte (40) et qui sont configurées pour être disposées et pour coulisser, durant l'utilisation, dans des rainures (22) respectives dudit moyen de guidage (21).

12. Appareil (100) de broyage de graines, comprenant au moins deux éléments de broyage (105, 106) et un dispositif (10, 10A) tel que selon l'une quelconque des revendications ci-inclus précédentes, dans lequel un élément de broyage (106) mobile est fixé audit élément de déplacement (13) dudit dispositif (10, 10A).

13. Procédé d'ajustement d'une position d'un élément de broyage (106) d'un appareil (100) de broyage de graines, **caractérisé en ce qu'**il permet de :
- rendre disponible un appareil (100) de broyage de graines comprenant au moins deux éléments de broyage (105, 106) et un dispositif (10, 10A) d'ajustement comprenant un élément de support fixe (11), un élément de mouvement (12) monté mobile sur ledit élément de support (11) et un élément de déplacement (13), qui supporte l'un desdits éléments de broyage (106) et qui est engagé avec une portion d'entraînement (28) dudit élément de mouvement (12) ;
- déplacer ledit élément de mouvement (12) par rapport audit élément de support (11) en le faisant tourner dans l'un ou l'autre sens autour d'un axe (X) afin de pousser ou de tirer respectivement ledit élément de déplacement (13) à l'aide de ladite portion d'entraînement (28) afin d'amener une translation continue dudit élément de déplacement (13) dans l'une ou l'autre direction le long dudit axe (X) et de positionner ledit élément de broyage (106) à une distance désirée par rapport à l'autre élément de broyage (105) ;
- contraster, à travers une friction, le mouvement dudit élément de mouvement (12) à l'aide du moyen de stabilisation (14).

14. Procédé tel que selon la revendication 13, **caractérisé en ce qu'**il permet d'exécuter une remise à zéro vers une position nulle desdits éléments de broyage (105, 106) et de réaligner un zéro présent sur une portion de préhension (25) d'un premier corps (23A) dudit élément de mouvement (12) avec une référence fournie sur un châssis (101) dudit appareil (100), ladite remise à zéro comprenant une étape dans laquelle ledit élément de mouvement (12) tourne afin de pousser ledit élément de déplacement (13) jusqu'à ce que lesdits éléments de broyage (105, 106) soient pris en contact de va-et-vient, une étape dans laquelle des éléments de fixation (60) sont retirés qui raccordent ledit premier corps (23A) à un second corps (23B) pourvu de ladite portion d'entraînement (28), une étape dans laquelle ledit premier corps (23A) tourne pour aligner le zéro sur ladite référence et une étape dans laquelle ledit premier corps (23A) est raccordé audit second corps (23B) avec lesdits éléments de fixation (60).

15. Procédé tel que selon l'une ou l'autre des revendications 13 ou 14, **caractérisé en ce qu'**il permet de supprimer le jeu présent entre des portions filetées (20, 27) dudit élément de support (11)et dudit élément de mouvement (12), à l'aide d'un moyen (49) de suppression élastique maintenu sous un état comprimé, qui agit sur ledit élément de déplacement (13) et pousser ce dernier et ledit élément de mouvement (12) prenant les filets de sa portion filetée (27) contre les filets de la portion filetée (20) dudit élément de support (11).
